# EUROPEAN PATENT APPLICATION

(11) **EP 4 084 141 A1**
(43) Date of publication of application: **02.11.2022**
(21) Application number: 20904911.3
(22) Date of filing: 13.10.2020
(51) Int. Cl.: H01M 4/505, H01M 4/525, H01M 10/052, H01M 10/0567, H01M 10/0569

(54) **NON-AQUEOUS ELECTROLYTE SECONDARY BATTERY**

(30) Priority: 26.12.2019 JP 2019237442
(71) Applicant: Panasonic Intellectual Property Management Co., Ltd., Osaka-shi, Osaka 540-6207 (JP)
(72) Inventor: MASAHARA Koh, Osaka 540-6207 (JP); UKA Youichirou, Osaka 540-6207 (JP)
(74) Representative: Novagraaf International SA
(86) International application number: PCT/JP2020/038577
(87) International publication number: WO 2021/131240

(57) **Abstract**

A non-aqueous electrolyte secondary battery includes a positive electrode, a negative electrode, and an electrolyte solution, wherein the positive electrode includes a composite oxide including lithium as a first metal, and a second metal X other than lithium; in the composite oxide, the second metal X includes Ni, Al, and Mn; the second metal X does not contain Co or the atomic ratio Co/X of Co to the second metal X is 0.02 or less; and the electrolyte solution contains a chain carboxylic acid ester having 2 to 4 carbon atoms, and a cyclic compound having a ring structure composed of 2 oxygen atoms and 3 to 5 carbon atoms.

## Description

### Non-aqueous Electrolyte Secondary Battery

### [Technical Field]

The present disclosure relates to a nonaqueous electrolyte secondary battery.

### [Background Art]

Secondary batteries, particularly lithium ion secondary batteries, are expected as a power source for small consumer applications, power storage devices, and electric vehicles, because of their high voltage and high energy density. With an expectation for a long life battery, Patent Literature 1 has proposed to improve cycle characteristics by using a carboxylic ester compound in a solvent of an electrolyte solution (Patent Literature 1).

### [Citation List]

### [Patent Literature]

PLT1: Japanese Laid-Open Patent Publication No. 2004-172120

### [Summary of Invention]

For a positive electrode active material of a lithium ion secondary battery, a composite oxide containing lithium and a metal (particularly, a transition metal) is used. As a composite oxide containing lithium and a transition metal, lithium cobaltate (LiCoO₂) has been conventionally used.

On the other hand, in recent years, the use of a positive electrode active material containing as little Co as possible is desired with an increase in cobalt prices due to an increase of demand. In this regard, an attempt has been made to use a lithium-containing composite oxide with a reduced Co content by replacing Co with other metal element in a part of the metal constituting the composite oxide. For example, an attempt has been made to use a lithium-containing composite oxide (NCAM) in which a portion of Co in lithium cobaltate is replaced with Ni, Al, and/or Mn.

However, with a battery in which the above composite oxide NCAM is used in the positive electrode and an ester compound is added to an electrolyte solution, cycle characteristics may deteriorate.

One aspect of the present disclosure relates to a non-aqueous electrolyte secondary battery including a positive electrode, a negative electrode, and an electrolyte solution, wherein the positive electrode contains a composite oxide including lithium as a first metal, and a second metal X other than lithium; in the composite oxide, the second metal X includes Ni, Al, and Mn, and the second metal X does not include Co or the atomic ratio Co/X of Co to the second metal X is 0.02 or less; and the electrolyte solution contains a chain carboxylic acid ester having 2 to 4 carbon atoms, and a cyclic compound having a ring structure composed of 2 oxygen atoms and 3 to 5 carbon atoms.

The present disclosure achieves a nonaqueous electrolyte secondary battery which can be manufactured at low cost and which is excellent in long-term cycle characteristics.

### [Brief Description of Drawings]

[FIG. 1]

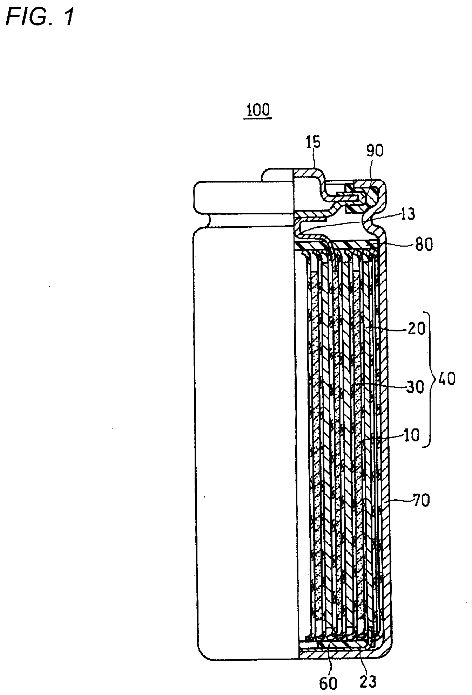

FIG. 1 is a schematic perspective partially cutaway view of the nonaqueous electrolyte secondary battery according to an embodiment of the present disclosure.

### [Description of Embodiments]

The nonaqueous electrolyte secondary battery according to the embodiment of the present disclosure has a positive electrode, a negative electrode, and an electrolyte solution, and the positive electrode includes a composite oxide containing lithium as a first metal and a second metal X other than lithium. In the composite oxide, the second metal X includes Ni, Al, and Mn. On the other hand, the second metal X does not contain Co, or the atomic ratio Co/X of Co to the second metal X is 0.02 or less. The electrolyte solution includes a chain carboxylic ester having 2 to 4 carbon atoms and a cyclic compound having a ring structure composed of 2 oxygen atoms and 3 to 5 carbon atoms.

Inclusion of the above-mentioned chain carboxylic acid ester in the solvent of the electrolyte solution improves cycle characteristics. Particularly, an electrolyte solution containing methyl acetate (MA) has low viscosity, so that an electrolyte solution tends to spread on a surface of the positive and negative electrode active materials, and nonuniform charge-discharge reaction can be suppressed in the positive and negative electrodes. Therefore, improvement in the cycle characteristics is highly effective. In particular, even when the coating amount of the positive and negative electrode active materials is increased and the thickness of the active material layer is increased for high energy density, the electrolyte solution can spread deep into the current collector side of the active material layer. Therefore, both high capacity and long life can be easily achieved.

However, when a lithium-transition metal composite oxide containing Mn is used for the positive electrode active material, the cycle characteristics may be deteriorated conversely due to the inclusion of the above-mentioned chain carboxylic acid ester in the electrolyte solution. As a reason for this, it is considered that Mn is eluted in the electrolyte solution with oxidation or reduction of the chain carboxylic acid ester, and that the composite oxide is changed (inactivated) into a crystal structure in which reversible storage and release of lithium ions is difficult. As a result, it is considered that capacity retention rate decreases as the batteries go through the charge/discharge cycles.

In general, carboxylic esters are susceptible to oxidation and also to reduction. Particularly, methyl acetate is susceptible to oxidation and reduction in batteries. On the other hand, it is known that Mn is easily eluted in the electrolyte solution. In a battery, a chain carboxylic ester exists in both an oxidized state and a reduced state, and can be reversibly changed by receiving electrons from, or giving electrons to, the positive and negative electrode active materials.

It is conceivable that the oxidized chain carboxylic ester reaches the vicinity of the positive electrode surface and may cause a reaction in which electrons are removed from the positive electrode active material to oxidize the positive electrode active material. At this time, if the battery is in the discharged state, a normal charge reaction, in which lithium ions are desorbed from the positive electrode active material, can be induced by the oxidized carboxylic ester. However, in a fully charged state or a state close thereto, since almost no lithium desorbable is present in the positive electrode active material, a reaction in which Mn is eluted instead of lithium can be induced. This is believed to result in a reduction in capacity retention rate.

Cyclic compounds inhibit the reactions of chain carboxylic acid esters (oxidized or reduced) on the positive electrode surfaces. It is believed that the cyclic compound adsorbs to the positive electrode material surface and forms a protective layer which inhibits the reaction (e.g., the oxidation or reduction reaction of the composite oxide) of the chain carboxylic acid ester at the surface of the positive electrode (oxidized or reduced). As a result, it is presumed that the inactivation of the positive electrode active material is suppressed, and the decrease in the capacity is also suppressed. In other words, capacity retention rate is improved when the batteries are repeatedly charged and discharged over a long period of time.

The cyclic compound has, as described above, a ring structure composed of 2 oxygen atoms, and 3 to 5 carbon atoms. In other words, the cyclic compound has a five membered ring structure composed of 2 oxygen atoms and 3 carbon atoms, a six membered ring structure composed of 2 oxygen atoms and 4 carbon atoms, or a seven membered ring structure composed of 2 oxygen atoms and 5 carbon atoms. The cyclic compound may be a derivative in which a hydrogen atom bonded to a carbon atom constituting a ring structure is substituted with another functional group, for example, an alkyl group such as a methyl group and an ethyl group or an aromatic hydrocarbon group such as a benzyl group. The cyclic compound may be dioxanes having a six membered ring structure.

As the dioxanes, any of 1,2-dioxane, 1,3-dioxane, and 1,4-dioxane may be used. Among these, 1,4-dioxane is preferable. As the dioxanes, 2-benzyl-1,3-dioxane may also be used. It is considered that the protective layer derived from dioxane can maintain a stable structure even at a high temperature by coordinating lithium ions to oxygen atoms in dioxane.

Examples of the other cyclic compounds include five-membered ring structures such as 1,3-dioxolane and 4-methyl-1,3-dioxolane.

The content of the cyclic compound in the electrolyte solution may be 0.5 mass% or more relative to the mass of the electrolyte solution. This allows for remarkable improvement in capacity retention rate.

The content of the cyclic compound in the electrolyte solution may be, for example, 5 mass% or less relative to the mass of the electrolyte solution. By setting the cyclic compound contained in the electrolyte solution to 5 mass% or less, an increase in the resistance of the positive electrode surface due to the protective layer formed by the cyclic compound is suppressed. The content of the cyclic compound in the electrolyte solution may be 2 mass% or less relative to the mass of the electrolyte solution, or may be 1.5 mass% or less.

The cyclic compound can be consumed by repeated charge and discharge cycles. In order to sustain the effect of the cyclic compound even when the charge/discharge cycle of the battery is repeated for a long period of time, it is necessary that the electrolyte solution before the injection into the battery or the electrolyte solution taken from the battery in the initial stage of use contains a sufficient amount of the cyclic compound. The electrolyte solution taken from the battery at the early stage of use may contain, for example, a cyclic compound of 0.02 mass% or more relative to the mass of the electrolyte solution, or may be 0.1 mass% or more.

When the cyclic compound is consumed, as a result, a coating (protective layer) derived from the cyclic compound is formed at least on the positive electrode surface. Even if the cyclic compound cannot be detected from the electrolyte solution in the battery, when at least the positive electrode has a coating derived from the cyclic compound on its surface, the embodiment thereof is encompassed by the present invention.

The content of the cyclic compound in the electrolyte solution can be measured by using gas chromatography-mass spectrometry (GC-MS), nuclear magnetic resonance (NMR), ion chromatography, and the like.

For the positive electrode active material, a composite oxide containing lithium as a first metal and a second metal X other than lithium is used. Specifically, the composite oxide may include a lithium-containing composite oxide represented by LiₐNi_{1-x-y-z}CoₓMn_{y}M¹_{z}O₂ (where 0 ≤ x ≤ 0.02, 0 < y ≤ 0.05, 0 < z ≤ 0.1). M¹ may include Al. The second metal X may contain no Co (i.e., x = 0). When Co is contained, the atomic ratio of Co to the second metal X is 0.02 or less (x ≤ 0.02). The lithium ratio a varies by charge and discharge, but may be, for example, 0.95 ≤ a ≤ 1.2 in a complete discharge state or in an initial state immediately after the active material is produced.

As the cobalt ratio x decreases, the crystal structure of the composite oxide tends to change (inactivate) into a structure in which reversible storage and release of lithium ions is difficult by repeated charge and discharge. In particular, at x ≤ 0.02, inactivation of the composite oxide is remarkable, and the necessity of replacing Co with Mn to stabilize the crystal structure increases. Then, when Co is replaced with Mn, when a chain carboxylic ester is used as a solvent of an electrolyte solution, the above-mentioned problem of lowering capacity retention rate occurs. In this case, the addition of a cyclic compound is effective.

The atomic ratio of Mn to the second metal X may be 0.02 or more and 0.05 or less (0.02 ≤ y ≤ 0.05). When y ≥ 0.02, it is easy to stabilize the structure of the positive electrode active material when the Co ratio x in the composite oxide is set to 0.02 or less. On the other hand, when y ≤ 0.05, it is easy to suppress a decrease in capacity retention rate even when a chain carboxylic ester is contained in the electrolyte solution due to the addition of a cyclic compound.

A nonaqueous electrolyte secondary battery according to an embodiment of the present disclosure is described next. The nonaqueous electrolyte secondary battery includes, for example, a negative electrode, a positive electrode, and an electrolyte solution each shown below.

### [Negative Electrode]

The negative electrode includes a negative electrode current collector and a negative electrode mixture layer formed on the negative electrode current collector surface and having a negative electrode active material. The negative electrode active material layer can be formed, for example, by coating a negative electrode slurry in which a negative electrode mixture is dispersed in a dispersion medium on a surface of the negative electrode current collector and drying the slurry. The dried coating film may be rolled, if necessary. The negative electrode mixture layer may be formed on one surface of the negative electrode current collector, or on both surfaces thereof.

The negative electrode mixture contains a negative electrode active material as an essential component, and may contain a binder, a conductive agent, a thickener, and the like as an optional component. The negative electrode active material includes a material that electrochemically stores and releases lithium ions. As the material that electrochemically stores and releases lithium ions, a carbon material, an Si-containing material, or the like can be used. Examples of the Si-containing material include silicon oxide (SiOₓ:0.5 ≤ x ≤ 1.5), and a composite material (LSX) containing a silicate phase and silicon particles dispersed in the silicate phase.

Examples of the carbon material include graphite, soft carbon, hard carbon, and the like. Particularly, graphite with excellent charge/discharge stability and low irreversible capacity is preferable. Graphite means a material having a graphite type crystal structure, and includes, for example, natural graphite, artificial graphite, graphitized mesophase carbon particles, and the like. A kind of carbon material may be used singly, or two or more kinds may be used in combination.

For the negative electrode current collector, metal foil, mesh-body, net-body, punched sheet, etc. are used. As the material of the negative electrode current collector, stainless steel, nickel, nickel alloy, copper, copper alloy, and the like can be exemplified.

### [Positive Electrode]

The positive electrode includes, for example, a positive electrode current collector, and a positive electrode mixture layer formed on the surface of the positive electrode current collector. The positive electrode mixture layer can be formed, for example, by applying a positive electrode slurry in which a positive electrode mixture is dispersed in a dispersion medium on a surface of the positive electrode current collector and drying the slurry. The dried coating film may be rolled, if necessary. The positive electrode mixture layer may be formed on one surface of the positive electrode current collector, or may be formed on both surfaces thereof.

The positive electrode mixture includes a positive electrode active material as an essential component, and may include a binder, a conductive agent, and the like as optional components. The positive electrode active material includes a material that electrochemically stores and releases lithium ions. For the positive electrode active material, a composite oxide having a layered rock salt structure similar to that of LiCoO₂ and in which at least part of Co is replaced with Ni, Al, and Mn can be used. The composite oxide may be a lithium-containing composite oxide represented by the above LiₐNi_{1-x-y-z}CoₓMn_{y}M¹_{z}O₂ (0 ≤ x ≤ 0.02, 0 < y ≤ 0.05, 0 < z ≤ 0.1). In the above chemical formula, M¹ may include Al. The Co ratio may be substantially zero. That is, the composite oxide may be LiₐNi_{1-y-z}Mn_{y}M¹_{z}O₂ substantially free of Co (0 < y ≤ 0.05, 0 < z ≤ 0.1).

In terms of obtaining a high capacity, the atomic ratio of Ni in the metal other than lithium may be 0.8 or more and less than 1 (0 < x + y + z ≤ 0.2), or 0.9 or more and less than 1 (0 < x + y + z ≤ 0.1). The atomic ratio of Ni may be 0.8 or more and 0.98 or less (0.02 ≤ x + y + z ≤ 0.2) or 0.9 or more and 0.98 or less (0.02 ≤ x + y + z ≤ 0.1).

The element M¹ may contain elements other than Co, Ni, Al, and Mn. For the other elements, for example, at least one selected from the group consisting of Na, Mg, Sc, Y, Fe, Cu, Zn, Cr, Pb, Sb, and B can be used.

For the positive electrode current collector, for example, metal foil is used, and examples of the material include stainless steel, aluminum, aluminum alloys, titanium, and the like.

As the binder of each electrode, a resin material such as the following can be used: a fluororesin such as polytetrafluoroethylene and polyvinylidene fluoride (PVDF); a polyolefin resin such as polyethylene, and polypropylene; a polyamide resin such as aramid resin; a polyimide resin such as polyimide, and polyamideimide; an acrylic resin such as polyacrylic acid, polyacrylate (e.g., lithium polyacrylate), polymethyl acrylate, and ethylene-acrylic acid copolymer; a vinyl resin such as polyacrylonitrile, and polyvinyl acetate; polyvinylpyrrolidone; polyethersulfone; a rubbery material such as styrene-butadiene copolymer rubber (SBR), and the like. These may be used singly or in combination of two or more.

Examples of the conductive agent include: carbon blacks, such as acetylene black; conductive fibers, such as carbon fibers and metal fibers; fluorinated carbon; powders of metal such as aluminum; conductive whiskers, such as zinc oxide and potassium titanate; conductive metal oxides, such as titanium oxide; and organic conductive materials, such as phenylene derivatives. These may be used singly or in combination of two or more.

Examples of the thickener include cellulose derivatives (including cellulose ether) such as carboxy methylcellulose (CMC) and a modified product thereof (also including salts such as Na salts), methylcellulose; a saponified product of a polymer having a vinyl acetate unit such as polyvinyl alcohol; a polyether (such as a polyalkylene oxide such as polyethylene oxide), and the like. These may be used singly or in combination of two or more.

The dispersion medium is not particularly limited, and examples thereof include water, alcohol, N-methyl-2-pyrrolidone (NMP), and the like.

### [Electrolyte solution]

The electrolyte solution usually includes a solvent, a solute dissolved in the solvent, and an additive. The solute is an electrolyte salt which ionically dissociates in the electrolyte solution and may include a lithium salt. Various additives may be included in the electrolyte solution. In the electrolyte solution, the sum of the lithium salt and the solvent is 90 mass% or more and more preferably 95 mass% or more in the electrolyte solution.

The solvent includes a cyclic carbonic acid ester, a cyclic carboxylic acid ester, a chain carbonic acid ester, and a chain carboxylic acid ester, and is an electrolyte solution component which exhibits a liquid state at 25°C and contained in the electrolyte solution by 3 mass% or more. One or more kind of solvent may be used in any combination. The components other than the solvent and solute are additives, and the aforementioned cyclic compounds can be classified as additives.

Examples of the cyclic carbonic acid ester include propylene carbonate (PC), ethylene carbonate (EC), fluoroethylene carbonate (FEC), vinylene carbonate (VC), and vinyl ethylene carbonate (VEC).

Examples of the chain carbonic acid ester include diethyl carbonate (DEC), ethyl methyl carbonate (EMC), and dimethyl carbonate (DMC).

Examples of the cyclic carboxylic acid ester include γ-butyrolactone (GBL) and γ-valerolactone (GVL).

The solvents include chain carboxylic acid esters having 2 to 4 carbon atoms. Examples of the chain carboxylic acid ester include methyl formate, ethyl formate, propyl formate, methyl acetate, ethyl acetate, and methyl propionate. Among them, methyl acetate has a low viscosity and high stability, which can improve the low-temperature characteristics of the battery. The content of the above chain carboxylic acid ester in the electrolyte solution is preferably 10 vol% or more and 80 vol% or less, and more preferably 20 vol% or more and 45 vol% or less. In this case, it is possible to sufficiently reduce the viscosity of the electrolyte solution and also to easily improve the cycle characteristics.

The solvent may further contain a chain carboxylic acid ester other than the above (that is, a chain carboxylic acid ester having 5 or more carbon atoms).

A polymer which exhibits a solid state at 25°C by itself is not regarded as an electrolyte solution component even when it is contained in the electrolyte solution by 3 mass% or more. Such a polymer functions as a matrix for gelling the electrolyte solution.

Examples of the additive include, in addition to the above cyclic compounds, carboxylic acids, alcohols, 1,3-propanesultone, methylbenzenesulfonate, cyclohexylbenzene, biphenyl, diphenyl ether, and fluorobenzene.

The electrolyte solution may contain, in addition to the lithium salt already mentioned, yet another salt. Other salts include LiClO₄, LiAlCl₄, LiB₁₀Cl₁₀, LiBF₄, LiSbF₆, LiAsF₆, LiCF₃SO₃, LiCF₃CO₂, LiN(CF₃SO₂)₂, LiN(CF₃SO₂)(C₄F₉SO₂), LiN(C₂F₅SO₂)₂, LiCl, LiBr, Lil, and the like. As for the lithium salt, one or more kind may be used in any combination.

### [Separator]

It is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin, such as polypropylene and polyethylene.

The structure of the nonaqueous electrolyte secondary battery can be, for example, a structure in which an electrode group formed by winding a positive electrode and a negative electrode with a separator interposed therebetween and a nonaqueous electrolyte are accommodated in an outer case. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary batteries may be of any form, for example, a cylindrical type, prismatic type, coin type, button type, laminated type, etc.

FIG. 1 is a schematic perspective partially cutaway view of the nonaqueous electrolyte secondary battery according to an embodiment of the present disclosure.

A secondary battery 100 is a wound-type battery including a wound-type electrode group 40 and a non-aqueous electrolyte not shown. The wound electrode group 40 includes a strip-shaped positive electrode 10, a strip-shaped negative electrode 20, and a separator 30. A positive electrode lead 13 is connected to the positive electrode 10, and a negative electrode lead 23 is connected to the negative electrode 20.

One end in the longitudinal direction of the positive electrode lead 13 is connected to the positive electrode 10, and the other end thereof is connected to a sealing plate 90. The sealing plate 90 includes a positive electrode terminal 15. One end of the negative electrode lead 23 is connected to the negative electrode 20 and the other end thereof is connected to the bottom of a battery case 70 serving as a negative electrode terminal. The battery case 70 is a bottomed cylindrical battery can with one longitudinal end opened and the other end at the bottom serving as the negative electrode terminal. The battery case (battery can) 70 is made of metal, for example, formed of iron. The inner surface of the iron battery case 70 is usually nickel-plated. To the top and bottom of the wound type electrode group 40, a resin-made upper insulating ring 80 and a lower insulating ring 60 are disposed, respectively.

In the illustrated example, a cylindrical nonaqueous electrolyte secondary battery including a wound type electrode group has been described, but the present embodiment is not limited to this case and can be applied to other cases. The structure of the nonaqueous electrolyte secondary battery may be cylindrical, coin-shaped, button-shaped, or the like having a metallic battery case, or may be a laminated battery having a laminated sheet battery case made of a laminated body of a barrier layer and a resin sheet. The type of the electrode group is not particularly limited, and may be, for example, a laminated type.

The present invention will be described in detail below with reference to Examples and Comparative Examples. The present invention, however, is not limited to the following Examples.

### <Example 1>

### [LSX Preparation]

Silicon dioxide and lithium carbonate were mixed so that the atomic ratio: Si/Li was 1.05, and the mixture was baked in air at 950°C for 10 hours to obtain lithium silicate represented by the formula: Li₂Si₂O₅ (u=0.5). The obtained lithium silicate was pulverized so as to have an average particle size of 10 µm.

Lithium silicate (Li₂Si₂O₅) having an average particle size of 10 µm and a raw material silicon (3N, average particle size: 10 µm) were mixed at a mass ratio of 45:55. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid is closed, and the mixture was subjected to grinding at 200 rpm for 50 hours in an inert atmosphere.

Next, the powder mixture was taken out, and baked for 4 hours at 800°C in an inert atmosphere while applying pressure by a hot pressing machine, to obtain a sintered body (LSX) of the mixture.

Thereafter, the LSX was pulverized and passed through a 40-µm-mesh, and then the obtained LSX particles were mixed with coal-pitch (MCP250, JFE Chemical Corporation).

The mixture was baked at 800°C in an inert atmosphere, and the surfaces of the LSX particles were covered with conductive carbon to form a conductive layer. The coating mass of the conductive layer was 5 mass% relative to the total mass of the LSX particles and the conductive layer. Thereafter, LSX particles having an average particle size of 5 µm having a conductive layer were obtained using a sieve.

### [Negative Electrode Production]

LSX particles having conductive layers and graphite were mixed at a mass ratio of 3:97 and used as a negative electrode active material. The negative electrode active material, lithium polyacrylate, and styrene-butadiene rubber (SBR) were mixed at a mass ratio of 97.5:1:1.5, water was added, and then stirred using a mixer (T.K. HIVIS MIX, manufactured by PRIMIX Corporation) to prepare a negative electrode slurry. Next, the negative electrode slurry was applied to the surface of a copper foil, and the coating was dried and then rolled to form negative electrode mixture layers on both surfaces of the copper foil.

### [Positive Electrode Production]

A positive electrode slurry was prepared by mixing a lithium-containing composite oxide (LiNi_{0.9}Co_{0.02}Al_{0.03}Mn_{0.05}O₂) as an active material, acetylene black, polyvinylidene fluoride, and N-methyl-2-pyrrolidone (NMP) at a predetermined mass ratio. Next, the positive electrode slurry was applied to the surface of aluminum foil as a positive electrode current collector, and the coating film was dried, and then rolled to form a positive electrode mixture layer on both surfaces of the aluminum foil.

### [Nonaqueous Electrolyte Solution Preparation]

To a mixed solvent containing ethylene carbonate (EC), ethyl methyl carbonate (EMC), and methyl acetate (MA) in a volume ratio of 20:60:20, LiPF₆ as a lithium salt and 1,4-dioxane were added to prepare a nonaqueous electrolyte solution. The concentration of LiPF₆ in the nonaqueous electrolyte solution was set to 1.0 mol/liter. The content of dioxane was set to be 1 mass% relative to the mass of the entire nonaqueous electrolyte solution.

### [Nonaqueous Electrolyte Secondary Battery Production]

A lead tab was attached to each electrode, and an electrode group was produced by winding the positive electrode and the negative electrode in a spiral shape with a separator interposed so that the leads were positioned at the outermost peripheral portion. The electrode group was inserted into a metallic battery can, dried in vacuo at 105°C for 2 hours, and then nonaqueous electrolyte solution was injected to seal the opening of the battery can to obtain a nonaqueous electrolyte secondary battery A1.

### <Comparative Example 1>

In the preparation of the nonaqueous electrolyte solution, no 1,4-dioxane was added.

Except for this, a nonaqueous electrolyte secondary battery was produced in the same manner as in Example 1, thereby obtaining a battery B1.

### <Comparative Example 2>

A lithium-containing composite oxide (LiNi_{0.9}Co_{0.07}Al_{0.03}O₂) was used as the positive electrode active material.

Except for this, a nonaqueous electrolyte secondary battery was produced in the same manner as in Example 1, thereby obtaining a battery B2.

### <Comparative Example 3>

In the preparation of the nonaqueous electrolyte solution, no 1,4-dioxane was added.

Except for this, a nonaqueous electrolyte secondary battery was produced in the same manner as in Comparative Example 2, thereby obtaining a battery B3.

### <Comparative Example 4>

In the preparation of the nonaqueous electrolyte solution, a mixed solvent containing ethylene carbonate (EC) and ethyl methyl carbonate (EMC) in a volume ratio of 20:80 was used.

Also, no 1,4-dioxane was added.

Except for this, a nonaqueous electrolyte secondary battery was produced in the same manner as in Comparative Example 2, thereby obtaining a battery B4.

### <Example 2>

In preparation of the positive electrode, a positive electrode slurry was prepared by mixing a lithium-containing composite oxide (LiNi_{0.9}Al_{0.05}Mn_{0.05}O₂) as a positive electrode active material, acetylene black, polyvinylidene fluoride, and N-methyl-2-pyrrolidone (NMP) at a predetermined mass ratio. Next, the positive electrode slurry was applied to the surface of aluminum foil as a positive electrode current collector, and the coating film was dried, and then rolled to form a positive electrode mixture layer on both surfaces of the aluminum foil.

A lead tab was attached to each electrode, and an electrode group was produced by winding the positive electrode and the negative electrode in a spiral shape with a separator interposed so that the leads were positioned at the outermost peripheral portion. The electrode group was inserted into an exterior body made of an aluminum laminate film, dried in vacuo at 105°C for 2 hours, and then a nonaqueous electrolyte solution was injected and the opening of the laminate exterior body was sealed.

Except for this, a nonaqueous electrolyte secondary battery A2 was obtained in the same manner as in Example 1.

### <Comparative Example 5>

In the preparation of the nonaqueous electrolyte solution, no 1,4-dioxane was added.

Except for this, a nonaqueous electrolyte secondary battery was produced in the same manner as in Example 2, thereby obtaining a battery B5.

### <Comparative Example 6>

In the preparation of the nonaqueous electrolyte solution, a mixed solvent containing ethylene carbonate (EC) and ethyl methyl carbonate (EMC) in a volume ratio of 20:80 was used.

Also, no 1,4-dioxane was added.

Except for this, a nonaqueous electrolyte secondary battery was produced in the same manner as in Example 2, thereby obtaining a battery B6.

### <Comparative Example 7>

A lithium-containing composite oxide (LiNi_{0.9}Co_{0.07}Al_{0.03}O₂) was used as the positive electrode active material.

Except for this, a nonaqueous electrolyte secondary battery was produced in the same manner as in Example 2, thereby obtaining a battery B7.

### <Comparative Example 8>

In the preparation of the nonaqueous electrolyte solution, no 1,4-dioxane was added.

Except for this, a nonaqueous electrolyte secondary battery was produced in the same manner as in Comparative Example 7, thereby obtaining a battery B8.

### <Comparative Example 9>

In the preparation of the nonaqueous electrolyte solution, a mixed solvent containing ethylene carbonate (EC) and ethyl methyl carbonate (EMC) in a volume ratio of 20:80 was used.

Also, no 1,4-dioxane was added.

Except for this, a nonaqueous electrolyte secondary battery was prepared in the same manner as in Comparative Example 7, thereby obtaining a battery B9.

### [Evaluation]

### (Initial Charge and Discharge)

The batteries obtained above were set in an environment of 45°C, and subjected to constant current charging until the voltage reaches 4.2 V at a current of 0.3 It, and thereafter, subjected to constant voltage charging at a voltage of 4.2 V until the current reaches 0.02 It. Thereafter, constant current discharging was carried out until the voltage becomes 2.5 V at a current of 0.5 It, to determine the initial discharge capacity C0. Charging and discharging were performed in an environment of 25°C.

### (DCIR Measurement)

The batteries after the initial charge-discharge test were placed in an environment of 45°C, subjected to constant current charging at a current of 0.3 It until the voltage reaches 4.2 V, then constant voltage charging until the current reaches 0.02 It at a constant voltage of 4.2 V. Thereafter, the batteries were allowed to rest for 2 hours, and the resistance value was calculated from the voltage drop before and after discharging for 10 seconds at a current of 0.5 It, as the initial DCIR with SOC=100%.

### (Capacity Retention Rate)

Setting the pausing period to 10 minutes, charging and discharging were repeated with the above charging and discharging conditions in an environment of 45°C, to determine the discharge capacity C1 at 300th cycle. The ratio R1=C1/C0 of the discharge capacity C1 to the initial discharge capacity C0 by percentage was evaluated as capacity retention rate.

Table 1 shows evaluation results of capacity retention rate R1 and the initial DCIR of the batteries A1 and B1 to B4. In Table 1, the positive electrode active material used in each battery and the presence or absence (if present, its content ratio) of methyl acetate (MA) and 1,4-dioxane (1,4-DOX) in the electrolyte solution are shown together. The positive electrode of the batteries A1 and B1 contained Co by 2%, and Mn by 5%; and the positive electrode of the batteries B2 to B4 contained Co by 7%, and no Mn was contained.

The batteries B2 and B3 had lower initial DCIR than battery B4. This is an effect by replacing a portion of the solvent of the electrolyte solution with methyl acetate which has low viscosity. In fact, based on the comparison between the batteries A2, B5, and B6 in Table 2 to be described later, and the comparison between the batteries B7, B8, and B9, it is presumed that these are from the effect of replacement with methyl acetate independent from the positive electrode composition. Therefore, in order to lower the initial DCIR, it is crucial to replace a part of the solvent of the electrolyte solution with methyl acetate.

The batteries A1 and B 1 are advantageous over the batteries B2 to B4 in terms of manufacturing costs because of their less Co content in the positive electrode active material compared with the batteries B2 to B4. However, comparing Battery B1 with Battery B3, Battery B1 using the lithium-containing composite oxide containing 5 atomic % of Mn as the positive electrode active material exhibited a lower capacity retention rate than that of the battery B3. The reason is probably because by using the solvent containing methyl acetate in the electrolyte solution, Mn in the composite oxide is easily eluted.

On the other hand, in the battery A1, by adding 1,4-dioxane (1,4-DOX) to the electrolyte solution, a decrease in capacity retention rate was suppressed as compared with that of the battery B1. Therefore, the inclusion of methyl acetate (MA) and 1,4-dioxane (1,4-DOX) in the positive electrode compositions with the Co ratio as low as 2% enabled low-cost, low-initial DCIR, and high capacity retention rate to be maintained.

In the batteries B2 and B3, the lithium-containing composite oxide containing no Mn was used as the positive electrode active material. There are no significant differences in capacity retention rate with or without the addition of 1,4-dioxiane (1,4-DOX). Suppression of decrease in capacity retention rate by addition of 1,4-dioxane (1,4-DOX) is an effect unique to NCAM

Table 2 shows the results of evaluating capacity retention rate R1 and the initial DCIR of the batteries A2 and B5 to B9. As in Table 1, the positive electrode active materials used in the batteries and the presence or absence (if present, the content ratio thereof) of methyl acetate (MA) and 1,4-dioxane (1,4-DOX) in the electrolyte solution are also shown. In the positive electrode of the batteries A2 and B5, Co was not contained, Mn was contained by 5%; and in the positive electrode of the batteries B7 to B9, Co was contained by 7%, and Mn was not contained.

By comparing the initial DCIR of the battery A2 and B5 to B9, it is found that the inclusion of methyl acetate (MA) has an effect of lowering the initial DCIR.

However, capacity retention rate of the battery B5 containing methyl acetate (MA) is lower than that of the battery B6 containing no methyl acetate (MA). It seems that methyl acetate (MA) oxidized by charge/discharge cycles reacts with the positive electrode active material, causing Mn-elution.

However, capacity retention rate of the battery A2 containing methyl acetate (MA) and also 1,4-dioxane (1,4-DOX) is higher than that of the battery B5 containing methyl acetate (MA) but no 1,4-dioxane (1,4-DOX). As was the case in the positive electrode containing Co by 2% and Mn by 5% shown in Table 1, in the case of the battery A2, by adding 1,4-dioxane (1,4-DOX) to the electrolyte solution, a decrease in capacity retention rate was suppressed as compared with the case of the battery B1. In other words, it was confirmed that, even in the positive electrode containing no Co, the suppression of the decrease in capacity retention rate by adding 1,4-dioxane (1,4-DOX) was confirmed.

The initial DCIR of the battery A1 in Table 1 is slightly higher than the initial DCIR of the battery B1. Similarly, the initial DCIR of the battery A2 in Table 2 is slightly higher than the initial DCIR of the battery B5. This is thought to be due to the coating formed by 1,4-dioxane (1,4-DOX) during the initial charge/discharge. It is considered that a coating formed by 1,4-dioxane (1,4-DOX) suppresses Mn-elution.

**[Table 1]**

| Battery | Positive Electrode Active Material | Electrolyte Solution | | Initial DCIR (mΩ) | Capacity Retention Rate |
|---|---|---|---|---|---|
| | | Methyl acetate (vol%) | 1,4-dioxane (mass%) | | |
| A1 | LiNi_{0.9}Co_{0.02}Al_{0.03}Mn_{0.05}O₂ | 20 | 1 | 27.5 | 76.8 |
| B1 | LiNi_{0.9}Co_{0.02}Al_{0.03}Mn_{0.05}O₂ | 20 | - | 26.1 | 75.9 |
| B2 | LiNi_{0.9}Co_{0.07}Al_{0.03}O₂ | 20 | 1 | 24.8 | 77.1 |
| B3 | LiNi_{0.9}Co_{0.07}Al_{0.03}O₂ | 20 | - | 23.9 | 77.0 |
| B4 | LiNi_{0.9}Co_{0.07}Al_{0.03}O₂ | - | - | 25.2 | 77.3 |

**[Table 2]**

| Battery | Positive Electrode Active Material | Electrolyte Solution | | Initial DCIR (mΩ) | Capacity Retention Rate |
|---|---|---|---|---|---|
| | | Methyl acetate (vol%) | 1,4-dioxane (mass%) | | |
| A2 | LiNi_{0.9}Al_{0.05}Mn_{0.05}O₂ | 20 | 1 | 78.4 | 68.5 |
| B5 | LiNi_{0.9}Al_{0.05}Mn_{0.05}O₂ | 20 | - | 78.1 | 68.3 |
| B6 | LiNi_{0.9}Al_{0.05}Mn_{0.05}O₂ | - | - | 84.6 | 71.1 |
| B7 | LiNi_{0.9}Co_{0.07}Al_{0.03}O₂ | 20 | 1 | 64.0 | 73.1 |
| B8 | LiNi_{0.9}Co_{0.07}Al_{0.03}O₂ | 20 | - | 63.7 | 73.6 |
| B9 | LiNi_{0.9}Co_{0.07}Al_{0.03}O₂ | - | - | 64.7 | 75.5 |

### [Industrial Applicability]

According to the present disclosure, a nonaqueous electrolyte secondary battery excellent in long-term cycle characteristics can be provided. The nonaqueous electrolyte secondary battery according to the present disclosure is useful for a main power source of a mobile communication device, a portable electronic device, or the like.

### [Reference Signs List]

- 10: Positive Electrode
- 13: Positive Electrode Lead
- 15: Positive Electrode Terminal
- 20: Negative Electrode
- 23: Negative Electrode Lead
- 30: Separator
- 40: Wound Electrode Group
- 60: Lower Insulation Ring
- 70: Battery Case
- 80: Upper Insulation Ring
- 90: Sealing Plate
- 100: Secondary Battery

## Claims

1. A non-aqueous electrolyte secondary battery comprising a positive electrode, a negative electrode, and an electrolyte solution, wherein
the positive electrode includes a composite oxide comprising lithium as a first metal, and a second metal X other than lithium,
in the composite oxide, the second metal X includes Ni, Al, and Mn,
the second metal X does not contain Co, or the atomic ratio Co/X of Co to the second metal X is 0.02 or less, and
the electrolyte solution contains a chain carboxylic acid ester having 2 to 4 carbon atoms, and a cyclic compound having a ring structure composed of 2 oxygen atoms and 3 to 5 carbon atoms.

2. The nonaqueous electrolyte secondary battery of Claim 1, wherein the atomic ratio Mn/X of Mn to the second metal X is 0.02 or more and 0.05 or less.

3. The nonaqueous electrolyte secondary battery of Claim 1 or 2, wherein the chain carboxylic acid ester is methyl acetate.

4. The nonaqueous electrolyte secondary battery of any one of Claims 1 to 3, wherein the cyclic compound is 1,4-dioxane.

5. The nonaqueous electrolyte secondary battery of any one of Claims 1 to 4, wherein the content of the cyclic compound relative to the mass of the electrolyte solution is 0.5 mass% or more.

6. The nonaqueous electrolyte secondary battery of any one of Claims 1 to 5, wherein the content of the chain carboxylic acid ester in the electrolyte solution is 10 vol% or more.
